# EUROPEAN PATENT APPLICATION

(11) **EP 1 857 501 A1**
(43) Date of publication of application: **21.11.2007**
(21) Application number: 06712583.1
(22) Date of filing: 30.01.2006
(51) Int. Cl.: C08J 9/12, B29C 45/00, B29C 45/70, C08L 23/04, C08L 53/00, B29K 105/04

(54) **METHOD OF FORMING MOLDED FOAM AND MOLDED FOAM**

(30) Priority: 31.01.2005 JP 2005024277
(71) Applicant: JSR Corporation, Tokyo 104-8410 (JP)
(72) Inventor: KANAE, Kentarou, u, Tokyo, 1048410 (JP); MAEDA, Minoru, u, Tokyo, 1048410 (JP); ABE, Yutaka, u, Tokyo, 1048410 (JP); KOBAYASHI, Masato, u, Tokyo, 1048410 (JP)
(74) Representative: TBK-Patent
(86) International application number: PCT/JP2006/301440
(87) International publication number: WO 2006/080491

(57) **Abstract**

A method of molding a foam-molded product is provided which includes foam-molding a thermoplastic elastomer composition with a gas or a supercritical fluid, the composition containing 10 to 93 parts by mass of (1) an ethylene/α-olefin copolymer, 3 to 30 parts by mass of (2) a crystalline polyethylene resin, 3 to 30 parts by mass of (3) a hydrogenated block copolymer formed by hydrogenating a specific block copolymer, and 1 to 30 parts by mass (4) an α-olefin resin having three or more carbon atoms (provided that the total amount of the components (1), (2), (3), and (4) is 100 parts by mass), and having a melt flow rate at a temperature of 230°C and a load of 10 kg of 5 g/10 min or more and a melt tension at a temperature of 210°C and a take-up speed of 2 m/min of less than 3.0 cN. A foam-molded product is provided which exhibits excellent closed-cell properties, a uniform cell shape, a small cell diameter, excellent elastic recovery, excellent flexibility, excellent surface appearance, produces no odor, and exhibits excellent recyclability and an excellent cushion feel.

## Description

### TECHNICAL FIELD

The present invention relates to a method of molding a foam-molded product and a foam-molded product. More specifically, the present invention relates to a method of molding a foam-molded product by foam-molding a thermoplastic elastomer composition having excellent processability with a gas or a supercritical fluid, and a foam-molded product formed using the above molding method which exhibits excellent closed-cell properties, a uniform cell shape, a uniform cell diameter, sufficient elastic recovery, sufficient flexibility, and excellent surface appearance, produces no odor, and exhibits excellent recyclability and excellent cushion feel.

### BACKGROUND ART

In recent years, foam-molded products have been used in various fields such as shock-absorbing materials against vibration and noise and soft parts for automotive interior parts and exterior parts, household electrical goods, information instruments, and the like. In particular, a thermoplastic elastomer composition has attracted attention as a raw material enabling easy molding and easy foaming. A thermoplastic elastomer composition capable of dynamic crosslinking can be given as such a thermoplastic elastomer composition (see patent document 1, for example). It is known that a foam-molded product can be obtained using the above thermoplastic elastomer composition.

However, since it is difficult to uniformly foam a crosslinked rubber component contained in the dynamically-crosslinkable thermoplastic elastomer composition, only a crystalline polyolefin uniformly foams, whereby a nonuniform foam-molded product is obtained. Moreover, since a foaming gas escapes through the surface of the molded product, the surface of the molded product does not become smooth and flat, whereby the surface appearance deteriorates. Furthermore, the odor and discoloration of the foam-molded product obtained using the above thermoplastic elastomer composition are not sufficiently reduced. The above foam-molded product also has problems in that the production method is complicated, a usable crosslinking agent is expensive, the application is limited due to contamination by the crosslinking agent, and the like. On the other hand, a non-crosslinkable thermoplastic elastomer composition has a problem in that the resulting foam-molded product exhibits an increased compression set due to the absence of a crosslinked structure, for example.

A foam-molded product obtained using the thermoplastic elastomer composition disclosed in the patent document 1 or the like is flexible in comparison with ordinary foam-molded products. It is also possible to foam a non-crosslinkable olefin thermoplastic elastomer composition. The non-crosslinkable olefin thermoplastic elastomer composition can be easily and uniformly foamed by melting.

However, a foam-molded product having reasonable flexibility, excellent cushioning properties, and the like cannot be obtained by an injection foam-molding method. Moreover, there is a tendency for the foam-molded product to have a nonuniform cell diameter.

A thermoplastic elastomer composition and an injection foam-molding method have been proposed which can produce a foam-molded product having reasonable flexibility, excellent cushioning properties, and a uniform cell diameter (see patent document 2, for example). Although the above thermoplastic elastomer composition and injection foam-molding method exhibit such excellent properties, a chemical foaming agent used may remain to cause post-foaming during recycling, thereby causing the appearance to deteriorate. Moreover, it is difficult to recycle the crosslinked rubber. In addition, the product produces odors due to incorporation of the chemical foaming agent. Therefore, a product is demanded which exhibits excellent recyclability and an excellent cushion feel and produces no odor.
[Patent document 1] JP-A-6-73222
[Patent document 2] WO03/018677

### DISCLOSURE OF THE INVENTION

The present invention has been achieved in view of the problems of the related art. An object of the present invention is to provide a method of molding a foam-molded product and a foam-molded product. More specifically, the present invention relates to a method of molding a foam-molded product by foam-molding a thermoplastic elastomer composition having excellent processability with a gas or a supercritical fluid, and a foam-molded product formed by the above molding method which exhibits excellent closed-cell properties, a uniform cell shape, a uniform cell diameter, sufficient elastic recovery and flexibility, an excellent surface appearance, produces no odor, and exhibits excellent recyclability and an excellent cushion feel.

In order to achieve the above object, the present invention provides the following method of molding a foam-molded product and a foam-molded product.

[1] A method of molding a foam-molded product comprising foam-molding a thermoplastic elastomer composition with a gas or a supercritical fluid, the thermoplastic elastomer composition comprising 10 to 93 parts by mass of (1) an ethylene/α-olefin copolymer, 3 to 30 parts by mass of (2) a crystalline polyethylene resin, 3 to 30 parts by mass of (3) a hydrogenated block copolymer produced by hydrogenating a block copolymer in which each end is a conjugated polymer block having a 1,2-vinyl bond content of 25% or less and an intermediate block is a conjugated polymer block having a 1,2-vinyl bond content exceeding 25%, and 1 to 30 parts by mass of (4) an α-olefin resin having three or more carbon atoms (provided that the total amount of the components (1), (2), (3), and (4) is 100 parts by mass), and having a melt flow rate at a temperature of 230°C and a load of 10 kg of 5 g/10 min or more and a melt tension at a temperature of 210°C and a take-up speed of 2 m/min of less than 3.0 cN.

[2] The method of molding a foam-molded product according to [1], wherein (1) the ethylene/α-olefin copolymer is (1-1) a non-oil-extended ethylene/α-olefin copolymer or (1-2) an oil-extended ethylene/α-olefin copolymer.

[3] The method of molding a foam-molded product according to [2], wherein (1-2) the oil-extended ethylene/α-olefin copolymer comprises 20 to 80 mass% of (1-3) an ethylene/α-olefin copolymer and 80 to 20 mass% of (5) a mineral oil softening agent (provided that (1-3) + (5) = 100 mass%).

[4] The method of molding a foam-molded product according to any one of [1] to [3], wherein the thermoplastic elastomer composition further comprises (6) a nucleating agent.

[5] The method of molding a foam-molded product according to any one of [1] to [4], wherein the foam-molded product is obtained by injecting the thermoplastic elastomer composition, into which the gas or the supercritical fluid is injected, into a mold cavity space and opening the mold at a mold opening speed of 0.01 to 1.0 mm/sec to increase the cavity space, thereby foaming the thermoplastic elastomer composition.

[6] The method of molding a foam-molded product according to [5], wherein a mold retraction delay time is 0 to 60 seconds after completion of filling operation.

[7] The method of molding a foam-molded product according to [5] or [6], wherein the mold is opened so that the final thickness of the foam-molded product is 1.1 to 10.0 times the initial thickness of the material provided in the mold cavity space.

[8] The method of molding a foam-molded product according to any one of [1] to [7], wherein the foam-molded product including the thermoplastic elastomer composition is formed on a molded product including a polyolefin resin.

[9] The method of molding a foam-molded product according to any one of [1] to [8], wherein a molded product including a polyolefin resin is formed on the foam-molded product including the thermoplastic elastomer composition.

[10] A foam-molded product obtained by the method according to any one of [1] to [9].

[11] The foam-molded product according to [10], having an average cell diameter of 1 to 200 µm.

Since the method of molding a foam-molded product according to the present invention foam-molds a specific thermoplastic elastomer composition using a gas or a supercritical fluid, a foam-molded product can be obtained which has excellent closed-cell properties, a uniform cell shape, a small cell diameter, excellent elastic recovery, excellent flexibility, excellent surface appearance, no odor, excellent recyclability, and an excellent cushion feel.

Since the foam-molded product according to the present invention is obtained by foam molding using the method of molding a foam-molded product according to the present invention, the foam-molded product exhibits excellent closed-cell properties, uniform cell shape, small cell diameter, excellent elastic recovery, excellent flexibility, and excellent surface appearance, produces no odor, and exhibits excellent recyclability and excellent cushion feel. Moreover, use of a thermoplastic elastomer (TPE) provides excellent recyclability in comparison with crosslinkable rubber.

Automotive interior parts and the like formed of a laminate of a base material and a foam layer can be easily molded by forming a foam-molded product on the surface of the base material made of a resin or the like.

### BEST MODE FOR CARRYING OUT THE INVENTION

Preferred embodiments of the present invention are described below in detail. Note that the present invention is not limited to the following embodiments, and various modifications and improvements of the design may be appropriately made without departing from the scope of the present invention based on knowledge of a person having ordinary skill in the art.

The thermoplastic elastomer composition used in the method of molding a foam-molded product according to the present invention is described below. The thermoplastic elastomer composition used in the present invention comprises 10 to 93 parts by mass of (1) an ethyl ene/α-olefin copolymer, 3 to 30 parts by mass of (2) a crystalline polyethylene resin, 3 to 30 parts by mass of (3) a hydrogenated block copolymer formed by hydrogenating a block copolymer in which each end is a conjugated polymer block having a 1,2-vinyl bond content of 25% or less and an intermediate block is a conjugated polymer block having a 1,2-vinyl bond content exceeding 25%, and 1 to 30 parts by mass of (4) an α-olefin resin having three or more carbon atoms (provided that the total amount of the components (1), (2), (3), and (4) is 100 parts by mass), as described below.

### (1) Ethylene/α-olefin copolymer

(1) The ethylene/α-olefin copolymer (hereinafter may be called "(1) EAO copolymer") is a copolymer containing ethylene and an α-olefin having 3 to 10 carbon atoms other than ethylene as the main components.

As examples of the α-olefin having 3 to 10 carbon atoms, propylene, 1-butene, 1-pentene, 4-methyl-pentene-1, 1-hexene, 1-heptene, 1-octene, 1-decene, and the like can be given. Of these, propylene, 1-butene, 1-hexene, and 1-octene are preferable, with propylene and 1-butene being more preferable. These compounds may be used either individually or in combination of two or more. An α-olefin having 10 or less carbon atoms exhibits excellent copolymerizability with other monomers. The content of units originating from the α-olefin in the (1) EAO copolymer is preferably 5 to 50 mol%, more preferably 10 to 45 mol%, and particularly preferably 15 to 40%. If the content of units originating from the α-olefin is less than 5 mol%, it may be difficult to obtain the rubber elasticity necessary for the thermoplastic elastomer. If the content of units originating from the α-olefin exceeds 50 mol%, the resulting elastomer may exhibit low durability.

A nonconjugated diene may be contained in the (1) EAO copolymer in an amount of 0 to 10 mol%, as required. If the nonconjugated diene content exceeds 10 mol%, the resulting elastomer may exhibit low durability. Specific examples of the nonconjugated diene include linear acyclic dienes such as 1,4-hexadiene, 1,6-hexadiene, and 1,5-hexadiene, branched acyclic dienes such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, and dihydromyrcene, alicyclic dienes such as tetrahydroindene, methyltetrahydroindene, dicyclopentadiene, bicyclo[2.2.1]-hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene, and 5-vinyl-2-norbornene; and the like. These compounds may be used either individually or in combination of two or more. As preferred nonconjugated dienes, 1,4-hexadiene, dicyclopentadiene, 5-ethylidene-2-norbornene, and the like can be given.

The limiting viscosity (η) of the (1) EAO copolymer measured in a decalin solvent at 135°C is 3.5 dl/g or more (preferably 4.0 dl/g or more, and more preferably 4.3 dl/g or more). If the limiting viscosity is less than 3.5 dl/g, the rubber elasticity of the thermoplastic elastomer composition may be decreased. If the limiting viscosity exceeds 6.8 dl/g, moldability may be decreased.

In the present invention, a halogenated copolymer in which part of the hydrogen atoms of the above binary copolymer or ternary copolymer is replaced with a halogen atom such as a chlorine atom or bromine atom, a graft polymer obtained by copolymerizing unsaturated monomers such as vinyl chloride, vinyl acetate, (meth)acrylic acid, a (meth)acrylic acid derivative (e.g. methyl (meth)acrylate, glycidyl (meth)acrylate, or (meth)acrylamide), maleic acid, a maleic acid derivative (e.g. maleic anhydride, maleimide, or dimethyl maleate), or a conjugated diene (e.g. butadiene, isoprene, or chloroprene) with the above binary copolymer, ternary copolymer, or halogenated copolymer, and the like may also be used as the (1) EAO copolymer in addition to the above binary copolymer and ternary copolymer. These copolymers may be used either individually or in combination of two or more.

(1-1) The non-oil-extended ethylene/α-olefin copolymer used in the first embodiment according to the present invention is also used as (1-3) the ethylene/α-olefin copolymer in (1-2) the oil-extended ethylene/α-olefin copolymer containing (5) the mineral oil softening agent according to the second embodiment. When using (1-2) the oil-extended ethylene/α-olefin copolymer as (1) the EAO copolymer, handling is facilitated when producing the thermoplastic elastomer composition used in the method of molding a foam-molded product according to the present invention. (1-3) The ethylene/α-olefin copolymer and (5) the mineral oil softening agent are used in (1-2) the oil-extended ethylene/α-olefin copolymer so that the content of (1-3) the ethylene/α-olefin copolymer is 20 to 80 mass%, preferably 25 to 75 mass%, and more preferably 30 to 70 mass%. Note that the total amount of (1-3) the ethylene/α-olefin copolymer and (5) the mineral oil softening agent in (1-2) the oil-extended ethylene/α-olefin copolymer is 100 mass%.

(1) The EAO copolymer may be obtained by a polymerization method under medium/low pressure such as a method of polymerizing ethylene, an α-olefin, and a non-conjugated diene in the presence of a catalyst prepared by dissolving a Ziegler-Natta catalyst, a soluble vanadium compound, and an organoaluminum compound in a solvent optionally while supplying hydrogen as a molecular-weight modifier. The components may be polymerized by gas-phase polymerization (fluid bed or stirring bed) or liquid-phase polymerization (slurry method or solution method).

As the above soluble vanadium compound, it is preferable to use a reaction product of at least one of VOCl₃ and VCl₄ and an alcohol. As the alcohol, methanol, ethanol, n-propanol, isopropanol, n-butanol, sec-butanol, t-butanol, n-hexanol, n-octanol, 2-ethylhexanol, n-decanol, n-dodecanol, or the like may be used. Of these, an alcohol having 3 to 8 carbon atoms is preferably used.

As examples of the organoaluminum compound, triethylaluminum, triisobutylaluminum, tri-n-hexylaluminum, diethylaluminum monochloride, diisobutylaluminum monochloride, ethylaluminum sesquichloride, butylaluminum sesquichloride, ethylaluminum dichloride, butylaluminum dichloride, methylaluminoxane (reaction product of trimethylaluminum and water), and the like can be given. Of these, ethylaluminum sesquichloride, butylaluminum sesquichloride, a mixture of ethylaluminum sesquichloride and triisobutylaluminum, or a mixture of triisobutylaluminum and butylaluminum sesquichloride is particularly preferably used. As the solvent, a hydrocarbon is preferably used. In particular, n-pentane, n-hexane, n-heptane, n-octane, isooctane, cyclohexane, or the like is preferably used. These solvents may be used either individually or in combination of two or more.

(1-1) The non-oil-extended ethylene/α-olefin copolymer and (1-2) the oil-extended ethylene/α-olefin copolymer may be in the form of bales, crumbs, pellets, or powder (including ground bales). (1-1) The non-oil-extended ethylene/α-olefin copolymer and (1-2) the oil-extended ethylene/α-olefin copolymer may be used in combination.

### (2) Crystalline polyethylene resin

(2) The crystalline polyethylene resin is formed of ethylene as the main monomer, and has an ethylene unit content of 90 to 100 mol%. When dissolving (2) the crystalline polyethylene resin in boiling n-hexane, the insoluble content of (2) the crystalline polyethylene resin is preferably 10 mass% or more, and particularly preferably 20 mass% or more (usually 95 mass% or less). If the insoluble content is less than 10 mass%, the processability of the resulting thermoplastic elastomer composition and the mechanical strength and the like of the resulting foam-molded product may be decreased. The melting peak of (2) the crystalline polyethylene resin measured using a differential scanning calorimeter is preferably 100°C or more.

As examples of (2) the crystalline polyethylene resin, polyethylene, a copolymer obtained by copolymerizing ethylene and an α-olefin having 3 to 8 carbon atoms (e.g. propylene, butene-1, 4-methylpentene-1, hexene-1, or octene-1) and having an ethylene unit content of 90 mol% or more, and the like can be given. As the polyethylene, low-density polyethylene produced by a high-pressure method, high-density polyethylene produced by a medium/low-pressure method, or linear low-density polyethylene may be used. Two or more types of polyethylene produced by different methods may be used in combination.

### (3) Hydrogenated block copolymer

(3) The hydrogenated block copolymer is formed by hydrogenating a block copolymer in which each end is a conjugated polymer block having a 1,2-vinyl bond content of 25% or less (hereinafter may be called "block A") and an intermediate block is a conjugated polymer block having a 1,2-vinyl bond content exceeding 25% (hereinafter may be called "block B"). It is preferable that (3) the hydrogenated block copolymer contain 5 to 90 parts by mass of the block A and 10 to 95 parts by mass of the block B (the total amount of the block A and the block B is 100 parts by mass), at least 80% of the double bonds in the conjugated diene portions included before hydrogenation be saturated, and (3) the hydrogenated block copolymer have a number average molecular weight of 50,000 to 700,000.

The above preferred (3) hydrogenated block copolymer is a block copolymer obtained by hydrogenating a copolymer having the block A on each end and the block B between the two blocks A (A-B-A block copolymer). Specifically, each of the block A and the block B is a block before hydrogenation. When the total amount of the block A and the block B in (3) the hydrogenated block copolymer is 100 mass%, the content of the block A is preferably 5 to 90 mass% (more preferably 10 to 80 mass%). If the content of the block A is less than 5 mass% (i.e. the content of the block B exceeds 95 mass%), it is difficult for (3) the hydrogenated block copolymer to exhibit sufficient crystallinity relative to (1) the EAO copolymer as the matrix, whereby it becomes difficult to form a three-dimensional mesh structure. If the content of the block A exceeds 90 mass% (i.e. the content of the block B is less than 10 mass%), hardness is increased to a large extent.

The block A is a 1,3-butadiene polymer block containing butadiene as the main component (i.e. 90 mass% or more, and preferably 95 mass% or more of the entire block A). The 1,2-vinyl bond content of the block A is 25% or less, preferably less than 25%, more preferably 20% or less, and particularly preferably 15% or less. If the 1,2-vinyl bond content of the block A is 25% or more, the melting point of the crystal after hydrogenation is significantly decreased, whereby mechanical strength tends to be decreased. The number average molecular weight of the block A is preferably 25,000 to 630,000 (more preferably 100,000 to 480,000). In (C) the conjugated diene block copolymer, the block A is hydrogenated to form a structure similar to that of low-density polyethylene.

The block B is a conjugated diene polymer block containing a conjugated diene compound as the main component (i.e. 50 mass% or more, and preferably 60 mass% or more of the entire block B). As examples of the conjugated diene compound, 1,3-butadiene, isoprene, 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene, chloroprene, and the like can be given. It is preferable to use 1,3-butadiene, isoprene, or 1,3-pentadiene, and particularly preferably 1,3-butadiene. The block B may be formed of two or more of these conjugated diene compounds.

The 1,2-vinyl bond content of the block B is more than 25%, preferably 30 to 95%, and more preferably 35 to 90%. If the 1,2-vinyl bond content of the block B is 25 % or less, the resulting product exhibits resin properties, whereby flexibility tends to be decreased. The 1,2-vinyl bond content of the block B exceeds the 1,2-vinyl bond content of the block A. If the 1,2-vinyl bond content of the block B is less than the 1,2-vinyl bond content of the block A, the flexibility of the thermoplastic elastomer composition used in the present invention tends to be decreased. The number average molecular weight of the block B is preferably 5000 to 650,000, and more preferably 20,000 to 540,000.

When the block B contains a vinyl aromatic polymer block, the content of the vinyl aromatic polymer block is preferably 35 mass% or less (more preferably 30 mass% or less, and still more preferably 25 mass% or less) of the entire block B (100 mass%). The glass transition temperature is increased by adding the vinyl aromatic polymer block, whereby low-temperature properties and flexibility tend to be decreased. The block B forms a polymer block having a structure similar to that of a rubber-like ethylene/butene-1 copolymer block or a vinyl aromatic compound/ethylene/butene-1 copolymer by hydrogenation.

As examples of the vinyl aromatic compound, styrene, tert-butylstyrene, α-methylstyrene, p-methylstyrene, p-ethylstyrene, divinylbenzene, 1,1-diphenylstyrene, vinylnaphthalene, vinylanthracene, N,N-diethyl-p-aminoethylstyrene, vinylpyridine, and the like can be given. Of these, styrene is preferable.

It is preferable that at least 80% (more preferably 90%, and still more preferably 95 to 100%) of the double bonds before hydrogenation be saturated in (3) the hydrogenated block copolymer obtained by hydrogenation. If the above percentage is less than 80%, thermal stability and durability tend to be decreased. The number average molecular weight of (3) the hydrogenated block copolymer is preferably 50,000 to 700,000 (more preferably 100,000 to 600,000). If the number average molecular weight of (3) the hydrogenated block copolymer is less than 50,000, heat resistance, strength, flowability, and processability tend to be decreased. If the number average molecular weight of (3) the hydrogenated block copolymer exceeds 700,000, flowability, processability, and flexibility tend to be decreased.

(3) The hydrogenated block copolymer may be obtained by subjecting the vinyl aromatic compound and the conjugated diene compound or the vinyl aromatic compound, the conjugated diene compound, and other monomers copolymerisable with these compounds to undergo living anionic polymerization using an organic alkali metal compound as a polymerization initiator in an inert organic solvent such as an aliphatic hydrocarbon solvent such as pentane, hexane, heptane, or octane, an alicyclic hydrocarbon solvent such as cyclopentane, methylcyclopentane, cyclohexane, or methylcyclohexane, or an aromatic hydrocarbon solvent such as benzene, xylene, toluene, or ethylbenzene. The hydrogenated diene copolymer used in the method of molding a foam-molded product according to the present invention may be easily obtained by hydrogenating the resulting block copolymer (hereinafter may be called "unhydrogenated polymer").

As examples of the organic alkali metal compound used as the polymerization initiator, organolithium compounds, organosodium compounds, and the like can be given. In particular, organolithium compounds such as n-butyllithium, sec-butyllithium, and tert-butyllithium are preferable. The amount of the organic alkali metal compound used is not particularly limited. The organic alkali metal compound is used in an amount of usually 0.02 to 15 mass%, and preferably 0.03 to 5 mass% for 100 mass% of the monomers.

The polymerization temperature is usually -10 to 150°C, and preferably 0 to 120°C. It is desirable to replace the atmosphere in the polymerization system with an inert gas such as nitrogen. The polymerization pressure is not particularly limited insofar as the pressure is sufficient to maintain the monomers and the solvent in a liquid phase under the above polymerization conditions.

When polymerizing the copolymer block containing the vinyl aromatic compound and the conjugated diene compound, the method of supplying the monomers of these compounds to the polymerization system is not particularly limited. The monomers may be supplied all together, continuously, intermittently, or by combining these methods. The amount of other copolymerization components, the amount of polar substance, the number and type of polymerization vessels, and the method of supplying the monomers when polymerizing the copolymer block containing the vinyl aromatic compound and the conjugated diene compound may be selected so that the resulting hydrogenated diene copolymer, the composition thereof, and the formed product of the composition exhibit desired properties.

The unhydrogenated polymer according to the present invention may be a copolymer produced by obtaining the block copolymer using the above method and causing the copolymer molecular chains to be coupled through a coupling residue using a coupling agent.

As examples of the coupling agent, divinylbenzene, 1,2,4-trivinylbenzene, epoxidized 1,2-polybutadiene, epoxidized soybean oil, epoxidized linseed oil, benzene-1,2,4-triisocyanate, diethyl oxalate, diethyl malonate, diethyl adipate, dioctyl adipate, dimethyl phthalate, diethyl phthalate, diethyl terephthalate, diethyl carbonate, 1,1,2,2-tetrachloroethane, 1,4-bis(trichloromethyl)benzene, trichlorosilane, methyltrichlorosilane, butyltrichlorosilane, tetrachlorosilane, (dichloromethyl)trichlorosilane, hexachlorodisilane, tetraethoxysilane, tetrachlorotin, 1,3-dichloro-2-propanone, and the like can be given. Of these, divinylbenzene, epoxidized 1,2-polybutadiene, trichlorosilane, methyltrichlorosilane, and tetrachlorosilane are preferable.

The hydrogenated diene copolymer used in the method of molding a foam-molded product according to the present invention is obtainable by partially or selectively hydrogenating the block copolymer obtained as described above. The hydrogenation method and the reaction conditions are not particularly limited. The block copolymer is usually hydrogenated at a temperature of 20 to 150°C and a hydrogen pressure of 0.1 to 10 MPa in the presence of a hydrogenation catalyst.

The hydrogenation rate may be optionally selected by changing the amount of the hydrogenation catalyst, the hydrogen pressure during the hydrogenated reaction, the reaction time, and the like. As the hydrogenation catalyst, a compound containing a Ib, IVb, Vb, VIb, VIIb, or VIII group metal element in the periodic table, such as a compound containing Ti, V, Co, Ni, Zr, Ru, Rh, Pd, Hf, Re, or Pt may be usually used. As specific examples of such a compound, metallocene compounds containing Ti, Zr, Hf, Co, Ni, Pd, Pt, Ru, Rh, Re, or the like, a carrier-type heterogeneous catalyst prepared by causing a metal such as Pd, Ni, Pt, Rh, or Ru to be carried on a carrier such as carbon, silica, alumina, or diatomaceous earth, a homogeneous Ziegler-type catalyst prepared by combining an organic salt or an acetylacetone salt of a metal element such as Ni or Co with a reducing agent such as organoaluminum, an organometallic compound or complex of Ru, Rh, or the like, fullerene, carbon nanotube, and the like storing hydrogen, and the like can be given. Of these, the metallocene compound containing Ti, Zr, Hf, Co, or Ni is preferable since the hydrogenated reaction can be carried out in an inert organic solvent in a homogeneous system. The metallocene compound containing Ti, Zr, or Hf is more preferable. In particular, a hydrogenation catalyst obtained by reacting a titanocene compound with an alkyllithium is preferable due to low cost and industrial advantage. The hydrogenation catalysts may be used individually or in combination of two or more. After hydrogenation, the catalyst residue is removed or a phenol or amine antioxidant is added, as required, and the hydrogenated diene copolymer according to the present invention is isolated from the hydrogenated diene copolymer solution. The hydrogenated diene copolymer may be isolated using a method of precipitating the hydrogenated diene copolymer by adding acetone, an alcohol, or the like to the hydrogenated diene copolymer solution, a method of adding the hydrogenated diene copolymer solution to hot water with stirring and removing the solvent by distillation, or the like.

The unhydrogenated conjugated diene block copolymer of (3) the hydrogenated block copolymer may contain a plurality of A-B-A block copolymers in a state in which the block copolymers are coupled through a coupling agent residue. Specifically, the unhydrogenated block copolymer may have a structure shown by [A-B-A-X]n-(A-B-A) (n represents an integer of 2 to 4, and X represents a coupling agent residue). The unhydrogenated block copolymer may have a structure shown by [A-B-X]n-(B-A) (n represents an integer of 2 to 4, and X represents a coupling agent residue) insofar as the coupling agent residue has a molecular weight sufficiently lower than those of the block A and the block B and does not affect the crystallinity of (3) the conjugated diene block copolymer. Specifically, the unhydrogenated block copolymer may have a structure shown by [A-B]n-Awhen omitting the relatively small coupling agent residue.

(3) The hydrogenated block copolymer may be a modified block polymer modified with a functional group. As the functional group, at least one group selected from the group consisting of a carboxyl group, an acid anhydride group, a hydroxyl group, an epoxy group, a halogen atom, an amino group, an isocyanate group, a sulfonyl group, and a sulfonate group may be used. An ordinary method may be used as the modification method. The content of the functional group in the modified block polymer is preferably 0.01 to 10 mol% (more preferably 0.1 to 8 mol%, and still more preferably 0.15 to 5 mol%) when the total amount of the constituent units of the block polymer is 100 mol%.

As examples of a monomer which may be preferably used to introduce the functional group, acrylic acid, methacrylic acid, itaconic acid, maleic acid, maleic anhydride, glycidyl acrylate, glycidyl methacrylate, allyl glycidyl ether, hydroxyethyl methacrylate, hydroxypropyl methacrylate, hydroxyethyl acrylate, hydroxypropyl acrylate, dimethylaminoethyl methacrylate, and the like can be given.

### (4) α-olefin resin having three or more carbon atoms

As examples of (4) the α-olefin resin having three or more carbon atoms (hereinafter may be called "(4) olefin resin") used in the present invention, a homopolymer or a copolymer of an α-olefin having 3 to 20 carbon atoms can be given. As specific examples of (4) the olefin resin, the following (co)polymers can be given: a propylene homopolymer, a random copolymer of propylene and 20 mol% or less of other α-olefins, a block copolymer of propylene and 30 mol% or less of other α-olefins, a 1-butene homopolymer, a random copolymer of 1-butene and 10 mol% or less of other α-olefins, a 4-methyl-1-pentene homopolymer, a random copolymer of 4-methyl-l-pentene and 20 mol% or less of other α-olefins, and the like. As specific examples of the α-olefin, propylene, 1-butene, 4-methyl-1-pentene, 1-hexene, 1-octene, and the like can be given. Among the above olefin resins, a propylene homopolymer and a random copolymer of propylene and 20 mol% or less of other α-olefins are particularly preferable. These olefin resins may be used either individually or in combination of two or more.

As examples of (4) the α-olefin resin having three or more carbon atoms used in the present invention is preferably a crystalline olefin resin, and has a degree of crystallinity determined using an X-ray method of usually 50% or more, and preferably 55% or more. The density of (4) the olefin resin is preferably 0.89 g/cm³ or more, and particularly preferably 0.90 to 0.94 g/cm³. The maximum peak temperature (i.e. melting point) (hereinafter called "Tm") of the crystalline olefin resin determined by differential scanning calorimetry is preferably 100°C or more (more preferably 120°C or more, and still more preferably 140 to 170°C). If the Tm is less than 100°C, the crystalline olefin resin may not exhibit sufficient heat resistance and strength. As examples of the crystalline olefin resin, polypropylene, polybutene-l, poly(4-methyl-pentene-l), polyhexene-l, a propylene/ethylene copolymer, a propylene/butene-1 copolymer, and the like can be given. These crystalline olefin resins may be used either individually or in combination of two or more.

The limiting viscosity (η) (molecular weight) of (4) the olefin resin measured in a decalin solvent at 135°C is 0.3 to 10 dl/g, and preferably 0.5 to 6 dl/g. The melt flow rate (hereinafter called "MFR") of (4) the olefin resin at a temperature of 230°C and a load of 2.16 kg is preferably 0.1 to 100 g/10 min, and more preferably 0.5 to 80 g/10 min. If the MFR (temperature: 230°C, load: 2.16 kg) is less than 0.1 g/10 min, kneadability, extrudability, and the like of the elastomer composition tend to become insufficient. If the MFR exceeds 100 g/10 min, strength tends to be decreased.

As (4) the olefin resin used in the present invention, it is particularly preferable to use polypropylene and/or a copolymer of propylene and ethylene having a degree of crystallinity of 50% or more, a density of 0.89 g/cm³ or more, an ethylene unit content of 20 mol% or less, a Tm of 100°C or more, and an MFR (temperature: 230°C, load: 2.16 kg) of 0.1 to 100 g/10 min, and a melting point of 140 to 170°C.

An amorphous olefin resin may be used as (4) the olefin resin in addition to the crystalline olefin resin.

As examples of the amorphous polyolefin resin, homopolymers such as atactic polypropylene and atactic poly(1-butene), copolymers of propylene (50 mol% or more) and other α-olefins (e.g. ethylene, 1-butene, 1-pentene, 1-hexene, 4-methyl-1-pentene, 1-octene, and 1-decene), copolymers of 1-butene (50 mol% or more) and other α-olefins (e.g. ethylene, propylene, 1-pentene, 1-hexene, 4-methyl-1-pentene, 1-octene, and 1-decene), and the like can be given.

The melt viscosity of the amorphous olefin resin at 190°C is 50,000 cSt or less, preferably 100 to 30,000 cSt, and more preferably 200 to 20,000 cSt. The degree of crystallinity of the amorphous olefin resin determined by X-ray diffraction measurement is 50% or less, preferably 30% or less, and more preferably 20% or less. The density of the amorphous olefin resin is preferably 0.85 to 0.89 g/cm³, and more preferably 0.85 to 0.88 g/cm³. The number average molecular weight Mn of the amorphous olefin resin is preferably 1000 to 20,000 (more preferably 1500 to 15,000).

The amorphous olefin resin is usually used in combination with the crystalline olefin resin. Note that either the amorphous olefin resin or the crystalline olefin resin may be used.

### Proportion of (1) ethylene/α-olefin copolymer, (2) crystalline polyethylene resin, (3) hydrogenated block copolymer, and (4) olefin resin

(1) The ethylene/α-olefin copolymer is used in an amount of 10 to 93 parts by mass, preferably 15 to 90 parts by mass, and more preferably 20 to 87 parts by mass for 100 parts by mass of the components (1), (2), (3), and (4) in total. (2) The crystalline polyethylene resin is used in an amount of 3 to 30 parts by mass, preferably 4 to 28 parts by mass, and more preferably 5 to 25 parts by mass. (3) The hydrogenated block copolymer is used in an amount of 3 to 30 parts by mass, preferably 4 to 28 parts by mass, and more preferably 5 to 25 parts by mass. (4) The olefin resin is used in an amount of 1 to 30 parts by mass, preferably 2 to 28 parts by mass, and more preferably 3 to 25 parts by mass. If the amount of each component is outside the above range, rubber elasticity, flexibility, moldability, and oil bleeding properties (when adding mineral oil softening agent) tend to deteriorate.

### (5) Mineral oil softening agent

A mineral oil softening agent may be added to the thermoplastic elastomer composition used in the method of molding a foam-molded product according to the present invention. A mineral oil is generally a mixture of aromatic rings, naphthene rings, and paraffin chains and is classified as a paraffin oil in which the number of carbon atoms of the paraffin chains accounts for 50% or more of the total number of carbon atoms, a naphthenic oil in which the number of carbon atoms of the naphthene rings accounts for 30 to 45% of the total number of carbon atoms, or an aromatic oil in which the number of carbon atoms of the aromatic rings accounts for 30% or more of the total number of carbon atoms. The mineral oil softening agent used in the present invention is preferably a paraffin oil, and particularly preferably a hydrogenated paraffin oil. It is preferable to use a mineral oil softening agent having a weight average molecular weight of 300 to 2000, and preferably 500 to 1500, a kinematic viscosity at 40°C of 20 to 800 cSt, and preferably 50 to 600 cSt, and a pour point of-40 to 0°C, and preferably -30 to 0°C. The viscosity gravity constant (hereinafter abbreviated as "V.GC.") of the mineral oil softening agent is preferably 0.790 to 0.999, more preferably 0.790 to 0.949, and particularly preferably 0.790 to 0.912.

As examples of commercially-available products of the aromatic mineral oil softening agent, Diana Process Oil AC-12, AC460, AH-16, AH-58 manufactured by Idemitsu Kosan Co., Ltd., Mobilsol K, 22, 130 manufactured by ExxonMobil Corporation, Kyoseki Process X50, X100, X140 manufactured by Nikko Kyodo Co., Ltd., Rezox No. 3 and Dutorex 729UK manufactured by Shell Chemicals Co., Ltd., Komorex 200, 300, 500, 700 manufactured by Nippon Oil Corporation, Esso Process Oil 110, 120 manufactured by ExxonMobil Corporation, Mitsubishi 34 Heavy Process Oil, Mitsubishi 44 Heavy Process Oil, Mitsubishi 38 Heavy Process Oil, Mitsubishi 39 Heavy Process Oil manufactured by Nippon Oil Corporation, Fukkol AROMA #1, # 3, # 5 manufactured by Fuji Kosan Co., Ltd., and the like can be given.

As examples of commercially-available products of the naphthenic mineral oil softening agent, Diana Process Oil NS-24, NS-100, NM-26, NM-280, NP-24 manufactured by Idemitsu Kosan Co., Ltd., Naprex 38 manufactured by ExxonMobil Corporation, Fukkol FLEX #1060N, #1150N, #1400N, #2040N, #2050N manufactured by Fuji Kosan Co., Ltd., Kyoseki Process R25, R50, R200, R1000 manufactured by Nikko Kyodo Co., Ltd., Shellflex 371JY, 371N, 451, N-40, 22, 22R, 32R, 100R, 100S, 100SA, 220RS, 220S, 260, 320R, 680 manufactured by Shell Chemicals Co., Ltd., Komorex No. 2 Process Oil manufactured by Nippon Oil Corporation, Esso Process Oil L-2, 765 manufactured by ExxonMobil Corporation, Mitsubishi 20 Light Process Oil manufactured by Nippon Oil Corporation, and the like can be given.

As examples of commercially-available products of the paraffinic mineral oil softening agent, Diana Process Oil PW-90, PW-100, PW-380, PS-32, PS-90, PS-430 manufactured by Idemitsu Kosan Co., Ltd., Fukkol Process P-100, P-200, P-300, P400, P-500 manufactured by Fuji Kosan Co., Ltd., Kyoseki Process P-200, P-300, P-500, Kyoseki EPT 750, EPT 1000, Kyoseki Process S90 manufactured by Nikko Kyodo Co., Ltd., Lubrex 26, 100, 460 manufactured by Shell Chemicals Co., Ltd., Esso Process Oil 815, 845, B-1 manufactured by ExxonMobil Corporation, Naprex 32 manufactured by ExxonMobil Corporation, Mitsubishi 10 Light Process Oil manufactured by Nippon Oil Corporation, and the like can be given. As the paraffinic mineral oil softening agent, Diana Process Oil PW-90, PW100, and PW380 manufactured by Idemitsu Kosan Co., Ltd. are preferably used.

(5) The mineral oil softening agent is used in an amount of 0 to 400 parts by mass, preferably 0 to 350 parts by mass, and more preferably 0 to 300 parts by mass for 100 parts by mass of the thermoplastic elastomer mixture (total amount of the components (1-1) and/or (1-3), (2), (3), and (4)). (5) The mineral oil softening agent is used in an amount of 0 to 300 parts by mass, preferably 0 to 250 parts by mass, and more preferably 0 to 200 parts by mass for 100 parts by mass of the thermoplastic elastomer mixture (total amount of the components (5), (2), (3), and (4)).

(5) The mineral oil softening agent may be added to (1-2) the oil-extended ethylene/α-olefin copolymer, or may be added when dynamically melt-kneading the components (1), (2), (3), and (4), or may be separately melt-kneaded and added after dynamically melt-kneading the components (1), (2), (3), and (4) (post-addition). The addition method is not particularly limited. (5) The mineral oil softening agent may be post-added to (1-2) the oil-extended ethylene/α-olefin copolymer.

The thermoplastic elastomer composition used in the present invention has a melt flow rate measured at a temperature of 230°C and a load of 10 kg of 5 g/10 min or more, preferably 10 g/10 min or more, and particularly preferably 15 g/10 min or more (usually 500 g/10 min or less). If the melt flow rate is less than 5 g/10 min, the flowability of the resulting thermoplastic elastomer composition becomes insufficient when injecting the thermoplastic elastomer composition and filling the mold with the thermoplastic elastomer composition. In particular, the mold may be insufficiently filled when the product has a long flow distance. The melt tension of the thermoplastic elastomer measured at a temperature of 210°C and a take-up speed 2 m/min is less than 3.0 cN, preferably 0.1 to 2.9 cN, more preferably 0.3 to 2.8 cN, and particularly preferably 0.5 to 2.6 cN. If the melt tension is 3.0 cN or more, it is difficult to foam the thermoplastic elastomer composition using a gas or a supercritical fluid.

The JIS-A hardness of the solid molded product of the thermoplastic elastomer composition is preferably 50 to 90, and particularly preferably 55 to 80. If the hardness is less than 50, the surface of the resulting foam-molded product becomes too soft, whereby scratches easily occur. If the hardness exceeds 90, flexibility and elastic recovery tend to be decreased.

The thermoplastic elastomer composition used in the present invention may contain (6) a nucleating agent in addition to the components (1), (2), (3), (4), and (5).

As (6) the nucleating agent, powder of an inorganic compound such as calcium carbonate, talc, mica, silica, or titania may be used. The cell diameter can be easily adjusted by adding the nucleating agent, whereby a foam-molded product having moderate flexibility and the like can be obtained. The particle diameter of the nucleating agent is preferably 2 to 50 µm, and particularly preferably 5 to 20 µm, although the particle diameter is not particularly limited. If the particle diameter is less than 2 µm, it is difficult for the nucleating agent to exhibit its effect, whereby the cell diameter is increased. If the particle diameter is more than 50 µm, the size of cells is increased and the number of cells is decreased, whereby the resulting foam-molded product becomes too flexible to exhibit inferior cushioning properties. The nucleating agent is used in an amount of usually 0 to 20 parts by mass, preferably 0.01 to 15 parts by mass, and more preferably 0.1 to 10 parts by mass for 100 parts by mass of the total polymer components contained in the thermoplastic elastomer composition used in the present invention. It is also preferable to add (6) the nucleating agent to the molding machine as a masterbatch using a polypropylene resin or the like.

The thermoplastic elastomer composition used in the present invention may be produced by supplying (1) the EAO copolymer, (2) the crystalline polyethylene resin, (3) the hydrogenated block copolymer, (4) the olefin resin, and optionally (5) the mineral oil softening agent which may be post-added to an internal kneader such as a Banbury mixer or a pressure kneader, a roll mill, a single-screw extruder, a twin-screw extruder, a kneader extruder, or the like, kneading the components to prepare a thermoplastic elastomer composition preferably in the shape of pellets, supplying the thermoplastic elastomer composition and (6) the nucleating agent to an injection molding machine, and kneading the thermoplastic elastomer composition and (6) the nucleating agent. The kneading temperature for preparing the thermoplastic elastomer composition is preferably the temperature at which the component (2) or (4) is melted, and usually 120 to 280°C. The kneading time is preferably 10 seconds to 60 minutes, and particularly preferably 30 seconds to 30 minutes, although the kneading time varies depending on the device used and the kneading temperature.

It is preferable to mix (6) the nucleating agent into the olefin resin (2) and/or (4) in advance to prepare a nucleating agent-containing resin, and add the nucleating agent-containing resin to (1) the EAO copolymer, (2) the crystalline polyethylene resin, (3) the hydrogenated block copolymer, and (4) the α-olefin resin having three or more carbon atoms. This allows (6) the nucleating agent to be more uniformly dispersed in the resulting thermoplastic elastomer composition.

As the olefin resin, a resin mainly formed of ethylene units, a resin mainly formed of propylene units, an ethylene/propylene copolymer, or the like may be used. The olefin resin may be crystalline or amorphous, and may be the same as the resin used as (2) the crystalline polyethylene resin or (4) the olefin resin. Since the amount of the olefin resin used is small, the specific structure of the thermoplastic elastomer composition is not impaired.

The content of (6) the nucleating agent is preferably 2 to 20 mass%, and particularly preferably 5 to 15 mass% of the nucleating agent-containing resin raw material (100 mass%). The nucleating agent can be uniformly dispersed, even if the content of the nucleating agent is low, by preparing such a high-concentration resin raw material (i.e. masterbatch) and adding the masterbatch so that a specific amount of the nucleating agent is mixed.

The thermoplastic elastomer composition used in the present invention may optionally contain various (7) additives such as a foaming agent, a lubricant, an antioxidant, a heat stabilizer, a light resistant agent such as HALS, a weather resistant agent, a metal inactivator, a UV absorber, a light stabilizer, a stabilizer such as a copper inhibitor, an antiseptic agent, an antifungal agent, a dispersant, a plasticizer, a flame retardant, a tackifier, a coloring agent such as titanium oxide, carbon black, and organic pigment, fillers such as a metal powder such as ferrite powder, inorganic fibers such as glass fibers and metal fibers, organic fibers such as carbon fibers and alamide fibers, composite fibers, inorganic whiskers such as potassium titanate whiskers, glass beads, glass balloons, glass flakes, asbestos, mica, calcium carbonate, talc, silica, calcium silicate, hydrotalcite, kaolin, diatom earth, graphite, pumice, ebo powder, cotton flock, cork powder, barium sulfate, a fluororesin, polymer beads, polyolefin wax, cellulose powder, rubber powder, and wood powder, a mixture of these, and a rubber such as an isobutylene-isoprene copolymer and silicone rubber, and a thermoplastic resin such as an ethylene-vinyl acetate copolymer and an ABS resin.

The method of molding a foam-molded product according to the present invention using the above thermoplastic elastomer composition is described below. The method of molding a foam-molded product according to the present invention includes foam-molding the thermoplastic elastomer composition using a gas or a supercritical fluid.

As the supercritical fluid, it is preferable to use a supercritical fluid obtained by causing an inert gas such as carbon dioxide or nitrogen to be in a supercritical state. For example, carbon dioxide can be caused to be in a supercritical state by adjusting the temperature to 31°C or more and the pressure to 7.3 MPa or more. Since carbon dioxide enters a supercritical state at a relatively low temperature and pressure and is dissolved in a molten resin to a large extent, carbon dioxide is suitable for foam molding using injection molding or the like. As the gas, it is preferable to use carbon dioxide, nitrogen, air, or the like.

As a preferable method of molding a foam-molded product according to the present invention, an injection foam molding method can be given. When using the injection foam molding method, a foam-molded product may also be obtained by a core-back injection molding method which includes injecting the thermoplastic elastomer composition, into which the gas or the supercritical fluid is injected, into a cavity space formed in a mold of an injection molding machine, withdrawing a movable mold or a movable core provided in a movable mold to a specific position at a specific speed immediately after injection or after a specific period of time has elapsed to increase the cavity space, thereby foaming the thermoplastic elastomer composition. Since the temperature of the mold is usually considerably lower than the temperature of the thermoplastic elastomer composition during injection, a dense skin layer which is foamed to only a small extent is formed on the surface of the foam-molded product contacting the surface of the cavity, and a foam layer is formed inside the foam-molded product.

The apparent viscosity of the thermoplastic elastomer composition is decreased when injecting the gas or the supercritical fluid into the thermoplastic elastomer composition and uniformly mixing the composition, whereby flowability is increased. Since the gas or the supercritical fluid exhibits a high expansion ratio, the average cell diameter can be easily controlled, whereby the cushion feel can be advantageously controlled. Moreover, the average cell diameter can be reduced by using the gas or the supercritical fluid. As the supercritical fluid, it is preferable to use a supercritical fluid obtained by causing carbon dioxide, nitrogen, or the like to be in a supercritical state in the same manner as the above foam-molded product.

Although a normal gas does not have an expansion ratio as high as that of the supercritical fluid, a foam-molded product can be produced using an inexpensive instrument. As the gas, a gas similar to that used for the above foam-molded product according to the present invention may be used.

The foam-molded product may be integrally formed to contact the surface of a base material made of a resin or the like. Such a laminate may be formed by disposing the base material in advance in the cavity space and applying the thermoplastic elastomer composition onto the surface of the base material. The laminate in which the foam-molded product is layered on the surface of the base material may be formed using an injection molding machine provided with two injection units by injecting a base material resin or the like to form the base material, withdrawing a movable core provided in a movable mold to form a cavity space into which the thermoplastic elastomer composition is injected, injecting the thermoplastic elastomer composition into which the supercritical fluid or the like is injected, and further withdrawing the movable core to increase the cavity space, thereby foaming the thermoplastic elastomer composition using the supercritical fluid or the like.

In the injection foam molding method according to the present invention, the withdrawing speed of the movable mold or the movable core provided in the movable mold, that is, the mold open speed is 0.01 to 1.0 mm/sec. The mold open speed is preferably 0.05 to 0.9 mm/sec, and more preferably 0.1 to 0.5 mm/sec. The average cell diameter can be reduced to 1 to 200 µm, and particularly 3 to 150 urn by employing the above mold open speed.

If the mold open speed is less than 0.01 mm/sec, insufficient foaming may occur due to cooling, whereby the surface of the foam-molded product becomes irregular. If the mold open speed exceeds 1.0 mm/sec, the foam-molded product becomes too flexible due to an increase in the cell diameter, whereby a foam-molded product exhibiting excellent cushioning properties and the like may not be obtained. Moreover, the cell diameter becomes nonuniform, whereby a foam-molded product is obtained in which the cell diameter significantly differs between the portion near the gate and the end portion.

The temperature of the thermoplastic elastomer composition to be injected is preferably 180 to 250°C, and particularly preferably 190 to 220°C. If the temperature of the thermoplastic elastomer composition is less than 180°C, the flowability of the thermoplastic elastomer composition becomes insufficient, whereby the end portion may not be sufficiently filled with the thermoplastic elastomer composition. If the temperature of the thermoplastic elastomer composition exceeds 250°C, thermal deterioration and the like may occur depending on the composition of the thermoplastic elastomer composition. The mold temperature is preferably 20 to 70°C, and particularly preferably 30 to 60°C. If the mold temperature is less than 20°C, the thermoplastic elastomer composition contacting the inner surface of the mold is rapidly cooled, whereby a uniform foam-molded product may not be obtained. Moreover, the end portion may not be sufficiently filled with the thermoplastic elastomer composition. If the mold temperature exceeds 70°C, a uniform skin layer may not be formed in the portion of the foam-molded product formed adjacent to the surface of the cavity.

The period of time (mold withdrawing delay time) from the injection operation of the thermoplastic elastomer composition to the withdrawing operation of the movable mold or the movable core provided in the movable mold is preferably 60 seconds or less, although the mold withdrawing delay time varies depending on the mold open speed. The withdrawing operation may be carried out immediately after the injection operation. The mold withdrawing delay time is preferably 0.3 to 50 seconds, and particularly preferably 0.5 to 40 seconds. If the mold withdrawing delay time exceeds 60 seconds, the thermoplastic elastomer composition may be cooled to a large extent, whereby a uniform foam-molded product may not be obtained.

The withdrawing amount of the mold may be determined depending on a predetermined expansion ratio. When forming automotive internal parts and the like, it is preferable to withdraw (open) the mold so that the final thickness of the foam-molded product is 1.1 to 10.0 times the initial thickness of the material provided in the mold cavity space. The expansion ratio indicated by the thickness ratio is usually 1.1 to 15 times, preferably 1.3 to 12 times, and more preferably 1.6 to 5 times.

The cooling time varies depending on the dimensions of the foam-molded product or the cooling method. It suffices that the temperature of the foam-molded product be decreased to about 40 to 80°C when removing the foam-molded product from the mold. The cooling time is usually 30 seconds or more, and may be 100 seconds or less even when molding a large product.

The foam-molded product according to the present invention formed using the above method of molding a foam-molded product according to the present invention is described below. Since the foam-molded product according to the present invention is molded using the method of molding a foam-molded product according to the present invention, the foam-molded product has excellent closed-cell properties, a uniform cell shape and cell diameter, excellent elastic recovery and flexibility, and excellent surface appearance.

Since the foam-molded product according to the present invention foam-molded product is foamed using the gas or the supercritical fluid, the foam-molded product produces no odor due to the absence of a chemical foaming agent residue in comparison with the case of using an inorganic foaming agent or the like. Moreover, the foam-molded product exhibits excellent recyclability and an excellent cushion feel. Therefore, it is preferable to use a gas or a supercritical fluid as in the present invention instead of a chemical foaming agent.

The average diameter (average cell diameter) of cells formed in the foam-molded product according to the present invention is preferably 1 to 200 µm, and more preferably 3 to 150 µm. If the average diameter is outside the above range, the cushion feel of the foam-molded product tends to deteriorate. The average cell diameter is a value determined from the electron micrograph of the cross section of the foam-molded product.

### EXAMPLES

The present invention is described below in detail by way of examples. Note that the present invention is not limited to the following examples without departing from the scope of the present invention. In the examples, "part" and "%" refer to "part by mass" and "mass%" unless otherwise indicated. The properties were measured according to the following methods. The composition and the properties of the thermoplastic elastomer composition are shown in Table 1, and the properties of the foam-molded product are shown in Table 2.

### (Material properties of thermoplastic elastomer composition)

The flowability of the resulting thermoplastic elastomer composition was measured as the melt flow rate (MFR) at a temperature of 230°C and a load of 10 kg (98 N) in accordance with JIS K7210. The hardness, tensile strength at break, tensile elongation at break, compression set, and melt tension of the resulting thermoplastic elastomer composition were evaluated by the following methods using an injection-molded sheet of the thermoplastic elastomer composition.

Hardness (duro A): measured in accordance with JIS K6253.
Tensile strength at break and tensile elongation at break: measured in accordance with JIS K6251.
Compression set: measured in accordance with JIS K6262 for a sample heat-treated at 70°C for 22 hours.

Melt tension: measured at a temperature of 210°C, a piston speed of 10 mm/min, and a strand take-up speed of 2 m/min using a melt tension tester ("Melt Tension Tester type II" manufactured by Toyo Seiki Seisaku-Sho, Ltd.).

### (Evaluation of foam-molded product)

The foam-molded product of the thermoplastic elastomer composition was evaluated by the following methods.

Expansion ratio: The specific gravities of the thermoplastic elastomer composition before foaming and the foam-molded product were measured in accordance with JIS K7112 to calculate the expansion ratio.
Expansion ratio = specific gravity of unfoamed molded product / specific gravity of foam-molded product

Cell appearance and average cell diameter (uniformity): The cross section of the foam-molded product was observed using a microscope (VH-6300 manufactured by KEYENCE Corporation) to determine whether the cells were closed cells or open cells. The number average cell diameter was calculated by analyzing the micrograph to determine the cell uniformity.

Surface appearance (smoothness): observed with the naked eye.
A molded product having a smooth surface and no visible defect was evaluated as "○".
A molded product having an irregular surface and having streaks was evaluated as "×".

Cell appearance: The cross section of the molded product was observed with the naked eye.

Cushioning properties: The surface of the molded product (sponge) was pressed with the thumb, and the recovery when removing the thumb was observed with the naked eye.
A molded product which recovered the original shape was evaluated as "O".
A molded product which did not recover the original shape after 10 seconds was evaluated as "×".

Odor: The molded product was organoleptically checked to determine the presence or absence of odor.

### [1] Production of thermoplastic elastomer composition

### (1) EAO copolymer

(1-1) EAO copolymer: ethylene/propylene/5-ethylidene-2-norbornene ternary copolymer (ethylene content: 66 mol%, 5-ethylidene-2-norbornene content: 4.5 mol%, limiting viscosity: 2.0 dl/g)
(1-2) EAO copolymer (oil-extended): ethylene/propylene/5-ethylidene-2-norbornene ternary copolymer (ethylene content: 66 mol%, 5-ethylidene-2-norbornene content: 4.5 mol%, limiting viscosity: 4.7 dl/g): 50 mass%, paraffin softening agent content: 50 mass%

### (2) Crystalline polyethylene resin

### (2-1) Crystalline polyethylene resin

Linear low-density polyethylene ("Novatech LL UJ990" manufactured by Japan Polychem Corporation, melting point determined by DSC: 124°C, melt flow rate (temperature: 190°C, load: 2.16 kg): 35.0 g/10 min)

### (2-2) Crystalline polyethylene resin

High-density polyethylene ("Novatech HD HJ490" manufactured by Japan Polychem Corporation, melting point determined by DSC: 133°C, melt flow rate (temperature: 190°C, load: 2.16 kg): 20.0 g/10 min)

### (3) Hydrogenated block copolymer

A 50-liter reaction vessel of which the atmosphere was replaced with nitrogen was charged with cyclohexane (24 kg), tetrahydrofuran (1 g), 1,3-butadiene (1200 g), and n-butyllithium (3.3 g). The components were subjected to adiabatic polymerization at 70°C. After the completion of the reaction, tetrahydrofuran (340 g) and 1,3-butadiene (2800 g) were added at 5°C, and the components were subjected to adiabatic polymerization. After 30 minutes, methyldichlorosilane (2.3 g) was added, and the components were allowed to react for 15 minutes.

After the completion of the reaction, hydrogen was supplied at a pressure of 0.4 MPa-G to react with polymer-terminal lithium (living anion) for 20 minutes with stirring to produce lithium hydride. After adjusting the temperature of the reaction solution to 90°C, tetrachlorosilane (7.2 g) was added. After stirring the mixture for about 20 minutes, a hydrogenation catalyst mainly formed of a titanocene compound was added, and a hydrogenation reaction was allowed to occur for two hours at a hydrogen pressure of 0.8 MPa. The reaction solution was adjusted to room temperature and normal pressure upon completion of hydrogen absorption, and removed from the reaction vessel. After the addition with stirring of the reaction solution to water, the solvent was removed by steam distillation to obtain a hydrogenated block polymer (hydrogenated diene polymer) having an A-B-A structure (A is polybutadiene with a low 1,2-vinyl bond content, and B is polybutadiene with a high 1,2-vinyl bond content).

The hydrogenation rate and the weight average molecular weight of the resulting hydrogenated conjugated diene block copolymer were respectively 99% and 300,000. The vinyl bond content of the first-stage polybutadiene block A of the unhydrogenated polymer was 15% (per end), and the vinyl bond content of the second-stage polybutadiene block B of the unhydrogenated polymer was 78%. The melt flow rate of the hydrogenated polymer measured at a temperature of 230°C and a load of 2.16 kg was 2.5 g/10 min.

### (4) α-olefin resin having three or more carbon atoms

Crystalline polypropylene ("BC06C" manufactured by Japan Polychem Corporation, melting point determined by DSC: 161°C, melt flow rate (temperature: 230°C, load: 2.16 kg): 60.0 g/10 min)

### (5) Mineral oil softening agent

"Diana Process Oil PW380" manufactured by Idemitsu Kosan Co., Ltd.

### (6) Nucleating agent

Calcium carbonate masterbatch: MAX 4070T (trade name) manufactured by Takehara Kasei K.K. (calcium carbonate content: 70%)

### (7) Additives

Paraffin softening agent: "Diana Process Oil PW380" manufactured by Idemitsu Kosan Co., Ltd.
Antioxidant: "Irganox 1010" manufactured by Ciba Specialty Chemicals

### (Thermoplastic elastomer composition A)

A pressure kneader (manufactured by Moriyama Co., Ltd., capacity: 10 liters) heated at 150°C was charged with 55 parts by mass of (1-1) the EAO copolymer, 10 parts by mass of (2-1) the crystalline polyethylene resin, 15 parts by mass of (3) the hydrogenated block copolymer, 20 parts by mass of (4) the α-olefin resin having three or more carbon atoms, and 0.2 parts by mass of the antioxidant at the ratio shown in Table 1. The components were kneaded at 40 rpm (shear rate: 200/sec) for 15 minutes until the resin was melted and each component was uniformly dispersed. The melted composition was pelletized using a Feeder Ruder (manufactured by Moriyama Co. Ltd.) at a temperature of 200°C.

### (Thermoplastic elastomer composition B)

A pressure kneader (manufactured by Moriyama Co., Ltd., capacity: 10 liters) heated at 150°C was charged with 55 parts by mass of (1-2) the EAO copolymer, 10 parts by mass of (2-1) the crystalline polyethylene resin, 15 parts by mass of (3) the hydrogenated block copolymer, 20 parts by mass of (4) the α-olefin resin having three or more carbon atoms, and 0.2 parts by mass of the antioxidant at the ratio shown in Table 1. The components were kneaded at 40 rpm (shear rate: 200/sec) for 15 minutes until the resin was melted and each component was uniformly dispersed. The melted composition was pelletized using a Feeder Ruder (manufactured by Moriyama Co. Ltd.) at a temperature of 200°C.

### (Thermoplastic elastomer composition C)

A pressure kneader (manufactured by Moriyama Co., Ltd., capacity: 10 liters) heated at 150°C was charged with 63 parts by mass of (1-2) the EAO copolymer, 10 parts by mass of (2-1) the crystalline polyethylene resin, 7 parts by mass of (3) the hydrogenated block copolymer, 20 parts by mass of (4) the α-olefin resin having three or more carbon atoms, and 0.2 parts by mass of the antioxidant at the ratio shown in Table 1. The components were kneaded at 40 rpm (shear rate: 200/sec) for 15 minutes until the resin was melted and each component was uniformly dispersed. The melted composition was pelletized using a Feeder Ruder (manufactured by Moriyama Co. Ltd.) at a temperature of 200°C.

### (Thermoplastic elastomer composition D)

A pressure kneader (manufactured by Moriyama Co., Ltd., capacity: 10 liters) heated at 150°C was charged with 57 parts by mass of (1-2) the EAO copolymer, 5 parts by mass of (2-1) the crystalline polyethylene resin, 15 parts by mass of (3) the hydrogenated block copolymer, 23 parts by mass of (4) the α-olefin resin having three or more carbon atoms, and 0.2 parts by mass of the antioxidant at the ratio shown in Table 1. The components were kneaded at 40 rpm (shear rate: 200/sec) for 15 minutes until the resin was melted and each component was uniformly dispersed. The melted composition was pelletized using a Feeder Ruder (manufactured by Moriyama Co. Ltd.) at a temperature of 200°C.

### (Thermoplastic elastomer composition E)

A pressure kneader (manufactured by Moriyama Co., Ltd., capacity: 10 liters) heated at 150°C was charged with 72 parts by mass of (1-2) the EAO copolymer, 10 parts by mass of (2-2) the crystalline polyethylene resin, 8 parts by mass of (3) the hydrogenated block copolymer, 10 parts by mass of (4) the α-olefin resin having three or more carbon atoms, 7 parts by mass of (5) the mineral oil softening agent, and 0.2 parts by mass of the antioxidant at the ratio shown in Table 1. The components were kneaded at 40 rpm (shear rate: 200/sec) for 15 minutes until the resin was melted and each component was uniformly dispersed. The melted composition was pelletized using a Feeder Ruder (manufactured by Moriyama Co. Ltd.) at a temperature of 200°C.

### (Thermoplastic elastomer composition F)

A pressure kneader (manufactured by Moriyama Co., Ltd., capacity: 10 liters) heated at 150°C was charged with 68 parts by mass of (1-2) the EAO copolymer, 10 parts by mass of (2-1) the crystalline polyethylene resin, 7 parts by mass of (3) the hydrogenated block copolymer, 15 parts by mass of (4) the α-olefin resin having three or more carbon atoms, and 0.2 parts by mass of the antioxidant at the ratio shown in Table 1. The components were kneaded at 40 rpm (shear rate: 200/sec) for 15 minutes until the resin was melted and each component was uniformly dispersed. The melted composition was pelletized using a Feeder Ruder (manufactured by Moriyama Co. Ltd.) at a temperature of 200°C.

**[Table 1]**

| | Thermoplastic elastomer composition | | A | B | C | D | E | F |
|---|---|---|---|---|---|---|---|---|
| | EAO copolymer (1-1) | | 55 | | | | | |
| | EAO copolymer (1-2) | | | 55 | 63 | 57 | 72 | 68 |
| Component | Crystalline polyethylene (2-1) | | 10 | 10 | 10 | 5 | | 10 |
| | Crystalline polyethylene (2-2) | | | | | | 10 | |
| | Hydrogenated block copolymer (3) | | 15 | 15 | 7 | 15 | 8 | 7 |
| | Crystalline polypropylene (4) | | 20 | 20 | 20 | 23 | 10 | 15 |
| | Mineral oil softening agent (5) | | | | | | 7 | |
| | Antioxidant | | 0.2 | 0.2 | 0.2 | 0.2 | 0.2 | 0.2 |
| | Melt flow rate | g/10 min | 43 | 83 | 95 | 102 | 52 | 64 |
| | Tensile strength at break | MPa | 4 | 5 | 5 | 5 | 6 | 5 |
| Properties | Tensile elongation at break | % | 540 | 890 | 860 | 840 | 1,070 | 960 |
| | Hardness | - | 84 | 82 | 81 | 81 | 64 | 73 |
| | Compression set | % | 55 | 53 | 60 | 64 | 42 | 53 |
| | Melt tension | cN | 2 | 1.8 | 2.2 | 1.1 | 4.3 | 3.4 |

### [2] Production of core-back foam-molded product

### (Example 1)

The thermoplastic elastomer composition A prepared in "[1] Production of thermoplastic elastomer composition" was supplied through a hopper of an injection molding machine ("J180EL3-UPS-Mucell" manufactured by Japan Steel Works, Ltd.). After injecting carbon dioxide into a cylinder (resin melting zone) of the injection molding machine at a pressure 2.5 MPa, the thermoplastic elastomer composition at 200°C was injected into a cavity space of the mold adjusted to 50°C at an injection speed of 50 mm/sec and an injection filling time of 1.6 seconds. A movable mold was withdrawn immediately after the completion of filling at a core-back speed of 0.4 mm/min and a core-back distance of 2 mm to foam the thermoplastic elastomer composition. The thermoplastic elastomer composition was cooled for 30 minutes to obtain a foam-molded product (width: 250 mm, length: 100 mm, thickness: 2.5 mm).

### (Example 2 and Comparative Examples 2 and 3)

A foam-molded product was obtained in the same manner as in Example 1 except for using the thermoplastic elastomer composition B, E, or F shown in Table 1 instead of the thermoplastic elastomer composition A.

### (Example 3)

A foam-molded product was obtained in the same manner as in Example 1 except for using the thermoplastic elastomer composition C shown in Table 1 instead of the thermoplastic elastomer composition A and adding 3 parts of a calcium carbonate masterbatch as a nucleating agent for 100 parts of the thermoplastic elastomer composition C. As the calcium carbonate masterbatch, MAX 4070T (trade name) manufactured by Takehara Kasei K.K. (calcium carbonate content: 70%) was used. Therefore, 2.1 parts of calcium carbonate was added.

### (Example 4)

A foam-molded product was obtained in the same manner as in Example 3 except for using the thermoplastic elastomer composition D shown in Table 1 instead of the thermoplastic elastomer composition C.

### (Example 5)

A foam-molded product was obtained in the same manner as in Example 2 except for using carbon dioxide in a supercritical fluid state at a pressure of 12.5 MPa utilizing a supercritical fluid generator manufactured by Japan Steel Works, Ltd. instead of carbon dioxide in a gaseous state at a pressure of 2.5 MPa.

### (Example 6)

A foam-molded product was obtained in the same manner as in Example 2 except for using nitrogen instead of carbon dioxide.

### (Comparative Example 1)

A foam-molded product was obtained in the same manner as in Example 5 except for using the thermoplastic elastomer composition E shown in Table 1 instead of the thermoplastic elastomer composition B. The melt tension of the thermoplastic elastomer composition E was outside the range of the present invention.

**[Table 2]**

| | Example 1 | Example 2 | Example 3 | Example 4 | Example 5 | Example 6 | Comparative Example I | Comparative Example 2 | Comparative Example 3 |
|---|---|---|---|---|---|---|---|---|---|
| Thermoplastic elastomer composition | A | B | C | D | B | B | E | E | F |
| Nucleating agent | - | - | calcium carbonate | calcium carbonate | - | - | - | - | - |
| Gas | carbon dioxide | carbon dioxide | carbon dioxide | carbon dioxide | | nitrogen | | carbon dioxide | carbon dioxide |
| Supercritical fluid | | | | | carbon dioxide | | carbon dioxide | | |
| Pressure (MPa) | 2.5 | 2.5 | 2.5 | 2.5 | 12.5 | 2.5 | 12.5 | 2.5 | 2.5 |
| Expansion properties | O | O | O | O | O | O | O | O | Δ |
| Surface appearance (smoothness) | O | O | O | O | O | O | × | × | O |
| Expansion ratio | 1.6 | 1.8 | 1.7 | 1.7 | 2 | 1.6 | 1 | 1.3 | 1.4 |
| Cell appearance | closed | closed | closed | closed | closed | closed | open cell film broke | open cell film broke | open cell film broke |
| Average cell diameter (µm) | 110 | 100 | 90 | 100 | 80 | 70 | - | - | - |
| Cell uniformity | uniform | uniform | uniform | uniform | uniform | uniform | - | - | - |
| Cushioning properties | O | O | O | O | O | O | × | × | × |
| Odor | none | none | none | none | none | none | none | none | none |

As is clear from Tables 1 and 2, since the thermoplastic elastomer compositions A to D have a low melt tension, the foam-molded products of Examples 1 to 6 had excellent foaming properties and surface appearance. On the other hand, the foaming properties and the surface appearance of the foam-molded products of Comparative Examples 1 to 3 deteriorated accompanying an increase in melt tension of the thermoplastic elastomer compositions E and F. Since the thermoplastic elastomer compositions A to D have exhibit high hardness, the foam-molded products of Examples 1 to 6 had excellent flexibility. On the other hand, the foam-molded products of Comparative Examples 1 to 3 exhibited poor flexibility due to the low hardness of the thermoplastic elastomer compositions E and F. Moreover, since the thermoplastic elastomer compositions A to D have exhibit high compression set, the foam-molded products of Examples 1 to 6 had excellent elastic recovery. On the other hand, the foam-molded products of Comparative Examples 1 and 2 exhibited poor elastic recovery due to the low compression set of the thermoplastic elastomer compositions E. The foam-molded products of Examples 1 to 6 exhibited excellent cell uniformity and cushioning properties and produced no odor. On the other hand, the foam-molded products of Comparative Examples 1 to 3 had open cells and exhibited poor cushioning properties.

### INDUSTRIAL APPLICABILITY

The foam-molded product molded using the method of molding a foam-molded product according to the present invention may be utilized for automotive interior parts such as an instrument panel and a glove box, automotive exterior parts such as a weather strip, electronic parts, electric vibration-proofing materials, other industrial parts, construction materials, sporting goods, and the like.

## Claims

1. A method of molding a foam-molded product comprising foam-molding a thermoplastic elastomer composition with a gas or a supercritical fluid, the thermoplastic elastomer composition comprising 10 to 93 parts by mass of (1) an ethylene/α-olefin copolymer, 3 to 30 parts by mass of (2) a crystalline polyethylene resin, 3 to 30 parts by mass of (3) a hydrogenated block copolymer produced by hydrogenating a block copolymer in which each end is a conjugated polymer block having a 1,2-vinyl bond content of 25% or less and an intermediate block is a conjugated polymer block having a 1,2-vinyl bond content exceeding 25%, and 1 to 30 parts by mass of (4) an α-olefin resin having three or more carbon atoms (provided that the total amount of the components (1), (2), (3), and (4) is 100 parts by mass), and having a melt flow rate at a temperature of 230°C and a load of 10 kg of 5 g/10 min or more and a melt tension at a temperature of 210°C and a take-up speed of 2 m/min of less than 3.0 cN.

2. The method of molding a foam-molded product according to claim 1, wherein (1) the ethylene/α-olefin copolymer is (1-1) a non-oil-extended ethylene/α-olefin copolymer or (1-2) an oil-extended ethylene/α-olefin copolymer.

3. The method of molding a foam-molded product according to claim 2, wherein (1-2) the oil-extended ethylene/α-olefin copolymer comprises 20 to 80 mass% of (1-3) an ethylene/α-olefin copolymer and 80 to 20 mass% of (5) a mineral oil softening agent (provided that (1-3) + (5) = 100 mass%).

4. The method of molding a foam-molded product according to any one of claims 1 to 3, wherein the thermoplastic elastomer composition further comprises (6) a nucleating agent.

5. The method for molding a foam-molded product according to any one of claims 1 to 4, wherein the foam-molded product is obtained by injecting the thermoplastic elastomer composition, into which the gas or the supercritical fluid is injected, into a mold cavity space and opening the mold at a mold opening speed of 0.01 to 1.0 mm/sec to increase the cavity space, thereby foaming the thermoplastic elastomer composition.

6. The method of molding a foam-molded product according to claim 5, wherein a mold retraction delay time is 0 to 60 seconds after completion of filling operation.

7. The method of molding a foam-molded product according to claim 5 or 6, wherein the mold is opened so that the final thickness of the foam-molded product is 1.1 to 10.0 times the initial thickness of the material provided in the mold cavity space.

8. The method of molding a foam-molded product according to any one of claims 1 to 7, wherein the foam-molded product including the thermoplastic elastomer composition is formed on a molded product including a polyolefin resin.

9. The method of molding a foam-molded product according to any one of claims 1 to 8, wherein a molded product including a polyolefin resin is formed on the foam-molded product including the thermoplastic elastomer composition.

10. A foam-molded product obtained by the method according to any one of claims 1 to 9.

11. The foam-molded product according to claim 10, having an average cell diameter of 1 to 200 µm.
